Europäisches Patentamt

European Patent Office

Office européen des brevets

(11) Numéro de publication : **0 007 462**
**B1**

(12) **FASCICULE DE BREVET EUROPÉEN**

(45) Date de publication du fascicule du brevet :
15.12.82

(21) Numéro de dépôt : 79102192.6

(22) Date de dépôt : 29.06.79

(51) Int. Cl.³ : **B 23 Q 35/04, B 23 B 3/28**

(54) **Dispositif de copiage d'une pièce représentée par un gabarit.**

(30) Priorité : 04.07.78 BE 189067

(43) Date de publication de la demande :
06.02.80 (Bulletin 80/03)

(45) Mention de la délivrance du brevet :
15.12.82 Bulletin 82/50

(84) Etats contractants désignés :
**AT CH DE FR GB IT NL SE**

(56) Documents cités :
CH A 473 647
DE A 2 006 187
DE C 947 846
DE C 959 874
FR A 889 366
FR A 1 534 838
FR A 2 278 226
US A 2 601 345
US A 3 128 657

(73) Titulaire : **N.V. Mondiale 81**
**Scharbeeklei 55**
**B-1800 Vilvoorde (BE)**

(72) Inventeur : **Muguerza, Luis**
**29, rue Edmond Picard**
**B-1180 Ixelles (BE)**

(74) Mandataire : **Pirson, Jean et al**
**c/o Bureau Gevers, S.A. rue de Livourne, 7 bte 1**
**B-1050 Brussels (BE)**

Dispositif de copiage d'une pièce représentée par un gabarit

La présente invention concerne un dispositif de copiage d'une pièce représentée par un gabarit d'axe longitudinal, comportant un copieur bidimensionnel comprenant un chariot longitudinal pouvant se déplacer suivant la direction longitudinale et un chariot transversal pouvant se déplacer suivant une direction transversale perpendiculaire à la direction longitudinale, et comportant également un dispositif de palpage du gabarit comprenant une vanne commandant le copieur bidimensionnel ainsi qu'au moins une tige de palpage influençant cette vanne (voir notamment les documents DE-A-2006187 et DE-C-959874).

On connaît des dispositifs de copiage à copieur bidimensionnel dans lesquels la tige de palpage est perpendiculaire au plan défini par les directions longitudinale et transversale, une telle tige ne pouvant palper qu'un gabarit constitué par une tôle la plus mince possible, découpée suivant le profil de la pièce à reproduire. De tels copieurs bidimensionnels offrent une gamme très étendue de possibilités quant aux profils admissibles pour le gabarit, qui peuvent être très compliqués ; mais ils présentent l'inconvénient que ce gabarit ne peut être constitué que par une tôle mince découpée suivant le profil de la pièce à reproduire, la fabrication d'un tel gabarit étant onéreuse et délicate.

On connaît également des copieurs unidimensionnels permettant de reproduire des gabarits constitués par des solides de révolution. Ces copieurs unidimensionnels ne permettent cependant pas de reproduire des gabarits présentant des gradins de sens opposés (en montée et en descente) à moins de recourir à deux copieurs de ce genre travaillant en sens opposés (cf. DE-A-2006187).

La présente invention a pour but de concevoir un dispositif de copiage, à l'aide d'un copieur bidimensionnel, qui ne présente pas les inconvénients susdits.

A cet effet, suivant l'invention, le dispositif de copiage se caractérise par le fait que le dispositif de palpage comprend une barre sur laquelle la tige de palpage est agencée de manière à ce que la tige s'étende sensiblement dans le plan défini par les directions longitudinale et transversale, une première liaison pivotante entre la barre et le corps de la vanne, dont l'axe de pivotement est parallèle à ce plan défini par les directions longitudinale et transversale, et un poussoir permettant à la tige de palpage d'influencer la vanne de commande, et que le dispositif de copiage comprend des moyens agencés pour modifier l'orientation de la tige de palpage par rapport à l'axe longitudinal du gabarit autour d'une seconde liaison pivotante dont l'axe de pivotement est perpendiculaire audit plan. Un tel dispositif de copiage permet de palper des gabarits constitués par des solides de révolution.

D'autres détails et particularités de l'invention ressortiront de la description ci-après, donnée à titre d'exemple non limitatif et en se référant aux dessins annexés.

La figure 1 est une vue en élévation frontale d'un dispositif de copiage suivant l'invention, le dispositif de palpage se trouvant dans une première position.

La figure 2 est une vue en élévation frontale du dispositif de copiage de la figure 1, le dispositif de palpage se trouvant cependant dans une seconde position.

La figure 3 est une vue en élévation latérale du dispositif de copiage des figures 1 et 2, le dispositif de palpage se trouvant cependant dans une position intermédiaire entre les positions des figures 1 et 2.

La figure 4 est une vue en coupe suivant la ligne IV-IV de la figure 3.

La figure 5 est une vue en élévation latérale illustrant une autre forme de réalisation du dispositif de palpage suivant l'invention.

Le dispositif de copiage suivant l'invention comprend un copieur bidimensionnel servant à reproduire une pièce représentée par un gabarit 1. Ce gabarit 1 est palpé à l'aide d'un dispositif de palpage 2 qui commande le copieur bidimensionnel de manière à usiner une pièce 3 en correspondance avec le gabarit 1.

Le copieur bidimensionnel comprend un chariot longitudinal 4 pouvant se déplacer suivant une direction longitudinale par rapport au châssis 5 de la machine portant le copieur, cette direction longitudinale étant indiquée par une flèche 6. Le chariot longitudinal 4 est déplacé à l'aide d'un premier vérin ou groupe cylindre-piston 7, s'étendant longitudinalement, dont le cylindre 8 est fixé au châssis 5 et dont le piston 9 est fixé au chariot longitudinal 4 par l'intermédiaire d'une tige 10. Un chariot transversal 11 est mobile par rapport au chariot longitudinal 4, suivant une direction transversale, indiquée par une flèche 12, perpendiculaire à la direction longitudinale. Ce chariot 11 comprend une pièce en U 13 coulissant sur une pièce 14 solidaire du chariot longitudinal. La pièce 13 est guidée en direction transversale sur la pièce 14 grâce à une glissière. Cette pièce 13 du chariot transversal 11 porte le dispositif de palpage 2 et également une tourelle porte-outils 15. Lors du palpage d'un gabarit et de l'usinage de la pièce 3, ce dispositif de palpage 2 et cette tourelle porte-outils 15 sont sensiblement immobiles par rapport à la pièce en U 13. Le déplacement du chariot transversal 11 est assuré par un vérin ou groupe cylindre-piston 16 agencé dans la pièce 13, dont le cylindre 17 est relié de manière fixe à la pièce en U 13, et dont la tige 18 du piston 19 est fixée à la pièce 14 solidaire du chariot longitudinal 4.

Suivant l'invention, le gabarit 1 utilisé avec ce copieur bidimensionnel est constitué par un solide de révolution qui est maintenu entre deux pointes 20, immobiles par rapport au châssis 5 de la machine. Le dispositif de palpage 2 comprend suivant l'invention une tige de palpage 21 qui s'étend sensiblement dans un plan parallèle au plan défini par les directions longitudinale et transversale. Cette tige de palpage 21 est fixée sur une barre 22 pivotant autour d'un pivot 23 dont l'axe de pivotement est parallèle au plan défini par les directions de déplacement longitudinal et transversal du copieur. La tige de palpage 21 agit par l'intermédiaire de la barre 22 et d'un poussoir 24 sur une vanne 25 commandant les déplacements des chariots longitudinal 4 et transversal 11 du copieur, cette vanne 25 commandant en fait l'admission et l'évacuation du fluide d'actionnement dans les chambres des vérins 7 et 16.

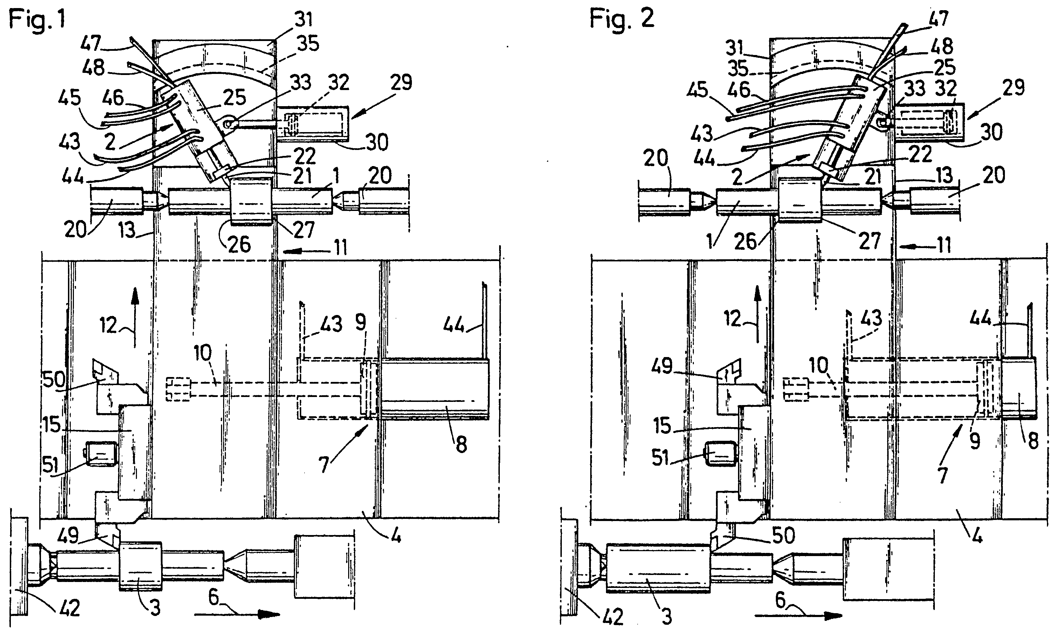

Afin de pouvoir reproduire un gabarit présentant des gradins verticaux, de sens opposés, tels que 26 et 27, on a prévu d'effectuer une première passe de copiage en parcourant le gabarit dans un premier sens avec une première orientation de la tige de palpage (fig. 1), cette première passe permettant de réaliser les gradins tels que 26, de modifier l'orientation de la tige de palpage à la fin de cette première passe, et d'effectuer une seconde passe en sens opposé à la première avec une seconde orientation de la tige de palpage (fig. 2), cette seconde passe permettant de réaliser des gradins tels que 27.

Suivant un premier exemple de réalisation de l'invention, représenté sur les figures 1 à 4, on modifie l'orientation de la tige de palpage en faisant pivoter l'ensemble de la vanne de commande 25, du poussoir 24, du pivot 23, de la barre 22 et de la tige de palpage 21 autour d'un second pivot 28 dont l'axe de pivotement est perpendiculaire au plan défini par les directions longitudinale et transversale. Le pivotement de cet ensemble est commandé par un vérin ou groupe cylindre-piston 29 s'étendant en direction longitudinale, dont le cylindre 30 est fixé à une pièce de support de vanne 31 et dont le piston 32 est relié au corps de la vanne 25 par l'intermédiaire d'un pivot 33 d'axe perpendiculaire au plan défini par les directions longitudinale et transversale et d'une glissière 34 fixée au pivot 33 et coulissant dans une rainure correspondante pratiquée dans le corps de la vanne 25.

Afin d'assurer un guidage précis de l'ensemble de la vanne, du poussoir, du pivot, de la barre et de la tige de palpage, on a également prévu une rainure 35 concentrique à l'axe du pivot 28 et réalisée dans la pièce de support 31 de la vanne. Un prolongement du corps de la vanne coulisse dans cette rainure 35 de manière à guider la vanne 25 au cours du changement d'orientation de la tige de palpage 21.

La pièce 31 de support de vanne peut coulisser en direction transversale sur une pièce 52 solidaire du chariot transversal 11. Cette possibilité est utilisée pour ajuster la position de la tige de palpage 21 par rapport au gabarit 1 avant le début des opérations de copiage, ce support 31 restant immobile par rapport à la pièce en U 13 du chariot transversal 11 au cours des opérations de copiage proprement dites.

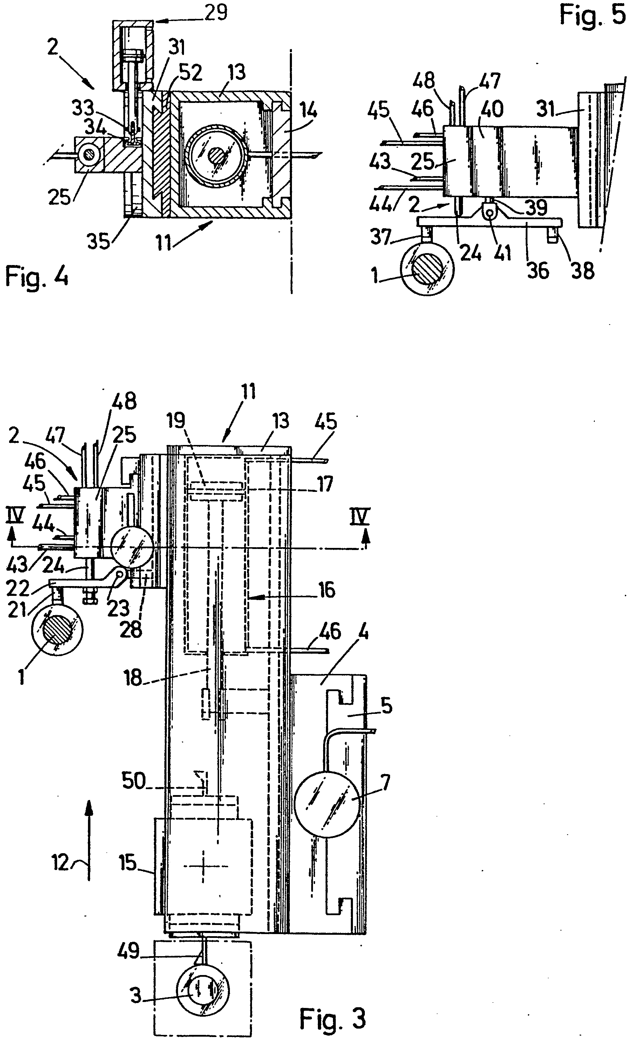

On a illustré sur la figure 5 un autre exemple de réalisation du dispositif de palpage 2 permettant, suivant l'invention, de donner à la tige de palpage du gabarit deux orientations différentes. Dans ce cas, la barre 36 du dispositif de palpage porte deux tiges 37 et 38. Chacune de ces tiges peut être utilisée comme tige de palpage lorsqu'elle se trouve en position sur le gabarit 1. Ces deux tiges 37 et 38 sont sensiblement parallèles et s'étendent d'un même côté par rapport à la barre 36. Cette dernière est reliée à l'arbre 39 d'un moteur rotatif 40, notamment un moteur électrique, par l'intermédiaire d'un pivot 41 dont l'axe de pivotement est situé exactement au milieu entre les deux tiges et est parallèle au plan défini par les directions longitudinale et transversale lorsque le dispositif palpe un gabarit.

L'arbre 39 du moteur 40 est sensiblement parallèle à la direction transversale, de telle sorte que lorsqu'on désire modifier l'orientation de la tige de palpage, il suffit de changer de tige en faisant tourner la barre 36 de 180° autour de l'arbre 39. Cette barre coopère avec un poussoir 24 qui agit sur une vanne de commande 25, comme dans l'exemple de réalisation suivant les figures 1 à 4.

La pièce à usiner est portée par un mandrin 42 d'un tour qui la maintient en rotation à une vitesse appropriée, autour d'un axe parallèle à l'axe longitudinal. La tourelle porte-outils 15 suit fidèlement les déplacements de la tige de palpage 21 grâce à un dispositif hydraulique comprenant notamment la vanne de commande 25, les vérins 7 et 16 et une source de fluide hydraulique sous pression (non représentée). Les conduites 43 et 44 relient la vanne aux chambres du vérin longitudinal 7. Les conduites 45 et 46 relient la vanne aux chambres du vérin transversal 16 et les conduites 47 et 48 servent à l'amenée du fluide hydraulique sous pression et au retour de ce fluide.

Etant donné qu'on a prévu d'effectuer deux passes de sens opposés sur le gabarit 1 et donc sur la pièce à usiner 3, la tourelle 15 porte deux outils 49 et 50, le premier outil 49 est utilisé pour usiner la pièce 3 dans le sens de la flèche 6 (fig. 1) et le second outil 50 est utilisé pour usiner la pièce 3 dans le sens opposé à la flèche 6 (fig. 2). Afin de pouvoir changer d'outil, la tourelle porte-outils 15 peut être amenée à pivoter de 180° par des moyens qui agissent en même temps qu'on modifie l'orientation de la tige de palpage 21, ces moyens étant notamment constitués par un moteur électrique 51.

Il doit être entendu que la présente invention n'est en aucune façon limitée aux formes de réalisation ci-dessus et que bien des modifications peuvent y être apportées sans sortir du cadre défini par les revendications.

## Revendications

1. Dispositif de copiage d'une pièce représentée par un gabarit (1) d'axe longitudinal, comportant un copieur bidimensionnel comprenant un chariot longitudinal (4) pouvant se déplacer suivant la direction longitudinale (6) et un chariot transversal (11) pouvant se déplacer suivant une direction transversale (12) perpendiculaire à la direction longitudinale, et comportant également un dispositif de palpage (2) du gabarit (1) comprenant une vanne (25) commandant le copieur bidimensionnel ainsi qu'au moins une tige de palpage 21) influençant cette vanne (25), caractérisé en ce que le dispositif de palpage (2) comprend une barre (22) sur laquelle la tige de palpage (21) est agencée de manière à ce que la tige (21) s'étende sensiblement dans le plan défini par les directions longitudinale et transversale, une première liaison pivotante (23) entre la barre (22) et le corps de la vanne (25), dont l'axe de pivotement est parallèle à ce plan défini par les directions longitudinale et transversale, et un poussoir (24) permettant à la tige de palpage (21) d'influencer la vanne de commande (25) et en ce que le dispositif de copiage comprend des moyens (29, 33) agencés pour modifier l'orientation de la tige de palpage (21) par rapport à l'axe longitudinal du gabarit (1) autour d'une seconde liaison pivotante (28) dont l'axe de pivotement est perpendiculaire audit plan.

2. Dispositif suivant la revendication 1, caractérisé en ce que la seconde liaison pivotante (28) relie le corps de la vanne (25) au chariot transversal (11), un moyen moteur (29) permettant de faire pivoter l'ensemble constitué par la vanne de commande (25), la première liaison pivotante (23), la barre susdite (22) et la tige de palpage (21) autour de l'axe de pivotement de cette seconde liaison pivotante (28).

3. Dispositif suivant la revendication 2, caractérisé en ce que le moyen moteur susdit est constitué par un groupe cylindre-piston (29) dont l'un des éléments (30) est fixé au chariot transversal (11) et dont l'autre élément (32) est relié au corps de la vanne (25) par l'intermédiaire d'une troisième liaison pivotante (33) dont l'axe de pivotement est perpendiculaire au plan défini par les directions longitudinale et transversale et qui peut coulisser par l'intermédiaire d'une glissière (34) sur le corps de la vanne de commande (25).

4. Dispositif suivant la revendication 2, caractérisé en ce que le moyen moteur (29) susdit est constitué par un moteur électrique (40) agencé pour faire pivoter l'ensemble constitué par la vanne de commande (25), la première liaison pivotante (23), la barre susdite (22) et la tige de palpage (21), autour de l'axe de pivotement de la seconde liaison pivotante (28).

5. Dispositif suivant la revendication 1, caractérisé en ce qu'une seconde tige (38), analogue à la tige de palpage (37) susdite est agencée sur ladite barre (36), ces deux tiges (37) et (38) étant parallèles est situées du même côté de la barre (36), en ce que la première liaison pivotante (41) est située au milieu de la barre entre ces deux tiges (37) et (38) et en ce que les moyens agencés pour modifier l'orientation de la tige de palpage (37) sont constitués par un moteur rotatif (40), fixé au corps de la vanne de commande (25), dont l'arbre (39) est parallèle à la direction transversale et est solidaire de l'axe de pivotement de la première liaison pivotante (41).

6. Dispositif suivant l'une quelconque des revendications 1 à 5, caractérisé en ce qu'il comprend des moyens (51) agencés pour modifier la position de la tourelle porte-outils, qui sont couplés aux moyens (29, 33) agencés pour modifier l'orientation de la tige de palpage (21).

7. Dispositif suivant l'une quelconque des revendications 1 à 6, caractérisé en ce que le gabarit (1) est constitué par un cylindre de révolution d'axe longitudinal.

## Claims

1. Device for copying a part depicted by a template (1) with lengthwise axis, comprising a two-dimension copier comprising a lengthwise carriage (4) movable along the lengthwise direction (6) and a cross-wise carriage (11) movable along a cross-wise direction (12) at right angle to the lengthwise direction, and also comprising a feeler device (2) for the template (1) comprising a valve (25) controlling the two-dimension copier as well as at least one feeler rod (21) acting on this valve (25), characterized in that the feeler device (2) comprises a bar (22) on which the feeler rod (21) is so arranged as to have the rod (21) extend substantially in the plane defined by the lengthwise end cross-wise directions, a first swinging link (23) between the bar (22) and the body of the valve (25) the swinging axis of which lies in parallel relationship with said plane defined by the lengthwise and cross-wise directions, and a push-rod (24) to let the feeler rod (21) act on the control valve (25), and in that the copying device comprises means (29, 33) so arranged as to modify the direction of the feeler rod (21) relative to the lengthwise axis of the template (1) about a second swinging link (28) swinging axis of which lies at right angle to said plane.

2. Device as defined in claim 1, characterized in that the second swinging link (28) connects the body of the valve (25) to the cross-wise carriage (11), an operator (29) allowing to swing the unit comprised of the control valve (25), the first swinging link (23), said bar (22) and the feeler rod (21) about the swing axis of said second swinging link (28).

3. Device as defined in claim 2, characterized in that said operator is comprised of a cylinder-piston unit (29) the one element (30) of which is fastened to the cross-wise carriage (11), and the other element (32) of which is connected to the body of the valve (25) through a third swinging link (33) the swinging axis of which lies at right angle to the plane defined by the lengthwise and cross-wise directions and which is slidable through a slider (34) on the body of the control valve (25).

4. Device as defined in claim 2, characterized in that said operator (29) is comprised of an electric motor (40) so arranged as to swing said unit comprised of the control valve (25), the first swinging link (23), said bar (22) and the feeler rod (21), about the swinging axis of the second swinging link (28).

5. Device as defined in claim 1, characterized in that a second rod (38) similar to said feeler rod (37) is arranged on said bar (36), both these rods (37) and (38) lying in parallel relationship on the same side of the bar (36), in that the first swinging link (41) is located midway on the bar between both these rods (37) and (38), and in that the means so arranged as to modify the direction of the feeler rod (37) are comprised of a rotating motor (40), fastened to the body of the control valve (25), the shaft thereof (39) being in parallel relationship with the cross-wise direction and integral with the swinging axis of the first swinging link (41).

6. Device as defined in any one of claims 1 to 5, characterized in that it comprises means (51) so arranged as to modify the position of the tool turret, which are coupled to the means (29, 33) for modifying the direction of the feeler rod (21).

7. Device as defined in any one of claims 1 to 6, characterized in that the template (1) is comprised of a revolution cylinder with lengthwise axis.

**Ansprüche**

1. Vorrichtung zum Kopieren nach einer Schablone (1) mit Längsachse mit einem zweidimensionalen Kopiergerät, das einen in Längsrichtung (6) verschiebbaren Längsschlitten (4) und einen in zur Längsrichtung senkrechter Querrichtung (12) verschiebbaren Querschlitten (11) umfaßt, und mit einer Abtasteinrichtung (2) für die Schablone (1), die ein das zweidimensionale Kopiergerät steuerndes Ventil (25) sowie wenigstens einen dieses Ventil (25) beeinflussenden Abtaststift (21) umfaßt, dadurch gekennzeichnet, daß die Abtasteinrichtung (2) aufweist: eine Stange (22), auf welcher der Abtaststif (21) derart angeordnet ist, daß sich der Abtaststift (21) im wesentlichen in die durch die Längs- und Querrichtung bestimmte Ebene erstreckt, eine erste Schwenkverbindung (23) zwischen der Stange (22) und dem Körper des Ventils (25), deren Schwenkachse parallel zu der durch die Längs- und Querrichtung bestimmten Ebene verläuft, und einen Stößel (24), der eine Beeinflussung des Steuerventils (25) durch den Abtaststift (21) gestattet, und daß die Kopiervorrichtung Mittel (29, 33) zum Ändern der Orientierung des Abtaststiftes (21) bezüglich der Längsachse der Schablone (1) um eine zweite Schwenkverbindung (28) umfaßt, deren Schwenkachse senkrecht zur genannten Ebene verläuft.

2. Vorrichtung nach Anspruch 1, dadurch gekennzeichnet, daß die zweite Schwenkverbindung (28) den Körper des Ventils (25) mit dem Querschlitten (11) verbindet und ein Antriebsmittel (29) eine Verschwenkung der aus dem Steuerventil (25), der ersten Schwenkverbindung (23), der Stange (22) und dem Abtaststift (21) bestehenden Gesamtheit um die Schwenkachse der zweiten Schwenkverbindung (28) gestattet.

3. Vorrichtung nach Anspruch 2, dadurch gekennzeichnet, daß das Antriebsmittel aus einer Kolben-Zylinder-Anordnung (29) besteht, deren eines Element (30) am Querschlitten (11) befestigt und deren anderes Element (32) mit dem Körper des Ventils (25) mittels einer dritten Schwenkverbindung (33) verbunden ist, deren Schwenkachse senkrecht zu der durch die Längs- und Querrichtung bestimmten Ebene verläuft und die mittels einer Gleitführung (34) auf dem Körper des Steuerventils (25) verschiebbar ist.

4. Vorrichtung nach Anspruch 2, dadurch gekennzeichnet, daß das Antriebsmittel (29) aus einem Elektromotor (40) besteht, der so angeordnet ist, daß die aus dem Steuerventil (25), der ersten Schwenkverbindung (23), der Stange (22) und dem Abtaststift (21) bestehende Gesamtheit um die Schwenkachse der zweiten Schwenkverbindung (28) schwenkbar ist.

5. Vorrichtung nach Anspruch 1, dadurch gekennzeichnet, daß auf der Stange (36) ein dem ersten Abtaststift (37) entsprechender, zweiter Abtaststift (38) angeordnet ist, wobei diese beiden Stifte (37, 38) parallel und auf derselben Seite der Stange (36) gelegen sind, daß die erste Schwenkverbindung (41) in der Mitte der Stange zwischen den beiden Stiften (37, 38) liegt, und daß die Mittel zum Ändern der Orientierung des Abtaststiftes (37) aus einem am Körper des Steuerventils (25) befestigten Rotationsmotor (40) bestehen, dessen Welle (39) parallel zur Querrichtung verläuft und mit der Schwenkachse der ersten Schwenkverbindung (41) kraftschlüssig verbunden ist.

6. Vorrichtung nach einem der Ansprüche 1 bis 5, dadurch gekennzeichnet, daß sie Mittel (51) zur Veränderung der Position eines revolverartigen Werkzeugträgers umfaßt, die ihrerseits mit den Mitteln (29, 33) zum Ändern der Orientierung des Abtaststiftes (21) gekoppelt sind.

7. Vorrichtung nach einem der Ansprüche 1 bis 6, dadurch gekennzeichnet, daß die Schablone (1) mit Bezug auf ihre Längsachse aus einem Rotationszylinder besteht.

Fig. 1

Fig. 2

0 007 462

0 007 462

Fig. 5

Fig. 4

Fig. 3

2